# EUROPÄISCHE PATENTANMELDUNG

(11) **EP 1 717 567 A1**
(43) Veröffentlichungstag der Anmeldung: **02.11.2006**
(21) Anmeldenummer: 06113252.8
(22) Anmeldetag: 28.04.2006
(51) Int. Cl.: G01L 1/24, G01D 5/353, B60M 1/00, H02G 7/00

(54) **Kraftmesseinrichtung zur Bestimmung einer Kontaktkraft**

(30) Priorität: 29.04.2005 DE 102005020125
(71) Anmelder: SIEMENS AKTIENGESELLSCHAFT, 80333 München (DE)
(72) Erfinder: Willsch, Michael Dr., 90762 Fürth (DE)

(57) **Zusammenfassung**

Kraftmesseinrichtung zur Bestimmung einer von einem Stromabnehmer eines Schienentriebfahrzeuges auf einen Fahrdraht (21) einer Oberleitung wirkenden Kontaktkraft. Die Einrichtung umfasst mindestens eine am Fahrdraht (21) zu befestigende mindestens einen Dehnungssensor (41a, 41b) aufweisende Kraftmesszelle (54) und Auswertemittel zur Bestimmung eines Messwertes für die auf den Fahrdraht (21) wirkende Kontaktkraft.

## Beschreibung

Kraftmesseinrichtung zur Bestimmung einer von einem Stromabnehmer eines Schienentriebfahrzeuges auf einen Fahrdraht einer Oberleitung wirkenden Kontaktkraft. Eine entsprechende Einrichtung zur Überwachung eines Fahrdrahtes einer Oberleitung, die zur elektrischen Energieversorgung eines Schienentriebfahrzeuges bestimmt ist, geht aus der DE 10 2004 020 324 A1 hervor.

Ein Schienentriebfahrzeug wird über einen elektrischen (Strom-)Leiter in Form einer Oberleitung mit elektrischer Energie versorgt. Die Energie gelangt mittels eines mit der Oberleitung in mechanischem Schleifkontakt stehenden Stromabnehmers von der Oberleitung über eine Schleifleiste zum Schienentriebfahrzeug. Um eine hohe Sicherheit, Verfügbarkeit und Zuverlässigkeit zu gewährleisten, sind außer der Oberleitung praktisch alle Betriebsmittel der Bahnenergieübertragung und -Verteilung redundant ausgeführt. Bei der Oberleitung erfolgt dies aus technischen und wirtschaftlichen Gründen nicht. Dennoch zieht ein Ausfall der Oberleitung zumindest auf dem vom Oberleitungs-Ausfall betroffenen Streckenabschnitt meistens auch einen Ausfall der kompletten Bahn-Energieversorgung nach sich. Mit jedem derartigen Ausfall sind hohe Kosten verbunden.

Eine Oberleitung besteht im Wesentlichen aus etwa zwanzig, in Reihe geschalteten Teilelementen, die in Form von Maschen angeordnet sind und das so genannte Kettenwerk bilden. Fällt ein Teilelement aus, so fällt auch die Oberleitung insgesamt aus. Ein signifikanter Anteil der Ausfallursachen kann auf eine fehlerhafte Interaktion zwischen Schienentriebfahrzeug und der Oberleitung zurückgeführt werden.

So kann die Presskraft des Stromabnehmers an den so genannten Fahrdraht der Oberleitung unangemessen sein. Bei überhöhten Anpresskräften, die auch Kontaktkräfte genannt werden, wird der Fahrdraht und auch die Schleifleiste einem übermäßigen Verschleiß ausgesetzt. Bei zu niedrigen Kontaktkräften kann es im Fahrbetrieb auch zu Kontaktverlusten kommen, die Lichtbögen zwischen Fahrdraht und Schleifleiste hervorrufen können. Durch die sehr hohen Temperaturen im Lichtbogen können Schäden durch Materialabtrag am Fahrdraht und am Stromabnehmer entstehen. Weist die Schleifleiste beispielsweise Riefen auf, kann im Fahrbetrieb der Fahrdraht kurzzeitig in diese Riefen mitgeführt werden. Dies kann zu unspezifischen Auslenkungen des gesamten Kettenwerks führen. Im schlimmsten Fall kann es dabei zu einer "Entgleisung" des Stromabnehmers kommen.

Gemäß DE 10 2004 020 324 A1 ist eine Einrichtung zur Fahrdrahtüberwachung angegeben. Die vom Stromabnehmer auf den Fahrdraht wirkenden Kräfte werden hierbei mit Hilfe von optischen Sensoren, insbesondere Faser-Bragg-Gitter-Sensoren (FBG-Sensoren), gemessen, die kraftschlüssig unmittelbar am Fahrdraht befestigt werden. Bei Krafteinwirkung verformen sich der Fahrdraht und somit auch der am Fahrdraht befestigte optische Sensor. Die Verformung des optischen Sensors liefert insbesondere Informationen über das Ausmaß der Krafteinwirkung auf den Fahrdraht. Für eine zuverlässige Kraftbestimmung müssen hierfür zahlreiche Einflussgrößen, wie das dynamische Verhalten des Fahrdrahtes, die Trägheitskräfte am Fahrdraht und auch der Fahrdrahtverschleiß berücksichtigt werden. Dies geschieht in der Regel durch aufwendiges Kalibrieren vor Ort.

Der Erfindung liegt nun die Aufgabe zugrunde, eine Kraftmesseinrichtung anzugeben, die verglichen mit dem Stand der Technik eine einfachere Installation ermöglicht und somit kostengünstiger anzuwenden ist.

Zur Lösung der Aufgabe wird eine Kraftmesseinrichtung entsprechend den Merkmalen des unabhängigen Patentanspruchs 1 angegeben.

Bei der erfindungsgemäßen Kraftmesseinrichtung handelt es sich um eine Kraftmesseinrichtung zur Bestimmung einer von einem Stromabnehmer eines Schienentriebfahrzeuges auf einen Fahrdraht einer Oberleitung wirkenden Kontaktkraft. Die Kraftmesseinrichtung umfasst mindestens eine am Fahrdraht zu befestigende mindestens einen Dehnungssensor aufweisende Kraftmesszelle und Auswertemittel zur Bestimmung eines Messwertes für die auf den Fahrdraht wirkende Kontaktkraft umfasst.

Durch die Integration des Dehnungssensors in die Kraftmesszelle kann die Kraftmesszelle noch vor Anbringen an den Fahrdraht kalibriert werden. Die die Kalibrierung beeinflussenden Größen werden im Wesentlichen von den Eigenschaften der Kraftmesszelle bestimmt und sind unabhängig vom Ort der späteren Montage der Kraftzelle am Fahrdraht. Insbesondere wenn an unterschiedliche Abschnitte des Fahrdrahtes mehrere Kraftmesszellen anzubringen sind, wirkt sich eine vorherige standardisierte Kalibrierung bei der Montage der Kraftmesszellen vorteilhaft aus. Dies vermeidet den Aufwand einer notwendigen Kalibrierung jeder einzelnen Kraftmesszelle vor Ort am Fahrdraht, was mit einer Zeit- und Kostenersparnis gleichzusetzen ist.

Vorteilhafte Ausgestaltungen der Kraftmesseinrichtung gemäß der Erfindung ergeben sich aus den von Anspruch 1 abhängigen Ansprüchen.

Es ist insbesondere vorteilhaft, wenn die Kraftmesszelle zwei schenkelartige, mit dem Fahrdraht kraftschlüssig zu verbindende Seitenteile aufweist, wobei wenigstens ein erster der beiden Seitenteile einen unter Einwirkung der Kontaktkraft des Stromabnehmers komprimierbaren Verformungskörper enthält, der mindestens eine Dehnungssensor in dem Verformungskörper formschlüssig angeordnet ist, und der mindestens eine Dehnungssensor mit der Verformung des Verformungskörpers verformbar ist. Mit der Ausgestaltung der Kraftmesszelle aus zwei Seitenteilen ist eine einfache und schnelle Montage der Kraftmesszelle am Fahrdraht möglich. Die Integration eines Verformungskörpers mit formschlüssig angeordnetem Dehnungssensor im entsprechenden Seitenteil gewährleistet einen möglichst einfachen und für insbesondere mechanische Störungen unempfindlichen Aufbau der Kraftmesszelle.

Es ist von Vorteil, wenn ein zweiter der beiden Seitenteile einen Verformungskörper mit einem formschlüssig angeordneten Dehnungssensor enthält. So ist es möglich, mit zwei voneinander unabhängigen Sensoren die Kraft, die bei der Messung vom Stromabnehmer auf die Kraftmesszelle wirkt, zu bestimmen. Diese Redundanz wirkt sich vorteilig auf die Messwertsicherheit aus. Sollte zudem ein Sensor insbesondere durch einen Defekt ausfallen, weist die Kraftmesszelle immer noch einen weiteren Sensor zur Kontaktkraftbestimmung auf. Somit ist beispielsweise ein unmittelbarer Austausch der Kraftmesszelle bei auftretendem Defekt nicht zwingend notwendig. Die Ausfallwahrscheinlichkeit der gesamten Kraftmesszelle ist folglich minimiert.

Besonders vorteilhaft können beide Seitenteile jeweils einen Befestigungskörper aufweisen, wobei die beiden Befestigungskörper teilweise formschlüssig am Fahrdraht angeordnet sind, und wobei mittels Befestigungsmittel durch miteinander Befestigen beider Befestigungskörper die Kraftmesszelle am Fahrdraht fixierbar ist. Damit sind ein fester und stabiler Halt und eine einfache Montage der Kraftmesszelle am Fahrdraht möglich.

Günstig ist, wenn der jeweilige den Verformungskörper aufweisende Seitenteil einen für den Stromabnehmerkontakt vorgesehenen Kontaktkörper aufweist. Damit wird ein direkter Kontakt des Stromabnehmers mit dem Verformungskörper und damit ein damit verbundener Verschleiß des Verformungskörpers vermieden. Der Kontaktkörper kann daher gezielt für einen guten Stromabnehmerkontakt und eine gute Kraftübertragung auf den Verformungskörper ausgeführt werden.

Vorteilhaft vorgesehen ist ein Faser-Bragg-Gitter-Sensor als Dehnungssensor und Einspeisemittel zur Einspeisung eines Lichtsignals in den mindestens einen FBG-Sensor, wobei eine Verformung des mindestens einen Faser-Bragg-Gitter-Sensors mit einer Änderung des Lichtsignals verbunden ist. Dabei ist der Messwert für die auf den Fahrdraht wirkende Kontaktkraft aus der verformungsbedingten Änderung des Lichtsignals bestimmbar. FBG-Sensoren zeichnen sich durch seine Genauigkeit und Empfindlichkeit bei Dehnungsmessungen und durch seine besondere Multiplexfähigkeit aus, so dass auf einfache Weise ein Sensornetzwerk realisiert werden kann. Die einzelnen FBG-Sensoren können neben der Verformung des Leiters darüber hinaus auch auf andere Einflussgrößen, wie beispielsweise auf die Temperatur, empfindlich sein.

Einzelne FBG-Sensoren können beispielsweise mit vorbestimmten Abständen zwischen 1 cm und mehreren km in Serie in einem einzigen Lichtwellenleiter eingeschrieben sein. So ist es denkbar, mehrere Kraftmesszellen mit einem gemeinsamen mehrere FBG-Sensoren aufweisenden Lichtwellenleiter zu versehen. Zur besseren Unterscheidbarkeit haben die in einem Lichtwellenleiter angeordneten FBG-Sensoren vorzugsweise jeweils eine voneinander verschiedene Schwerpunktwellenlänge. Darüber hinaus können auch diejenigen Sensoren einer Kraftmesszelle vorzugsweise unterschiedliche Schwerpunktswellenlängen. Die Schwerpunktswellenlängen von mehreren FBG-Sensoren eines Lichtwellenleiters müssen jedoch gezwungenermaßen nicht unterschiedlich sein, wenn zur Unterscheidung der Antwortsignale verschiedener FBG-Sensoren beispielsweise ein OTDR (Optical Time Domain Reflectometer) verwendet wird.

In jedem FBG-Sensor wird vom eingespeisten Lichtsignal ein durch die jeweilige Schwerpunktswellenlänge bestimmter Anteil zurückreflektiert. Die Schwerpunktswellenlänge ändert sich mit der Verformung des FBG-Sensors. Diese Veränderung im Wellenlängengehalt (oder Wellenlängenspektrum) des jeweiligen zurückreflektierten (Teil-)Lichtsignals kann als Maß für die Verformung und damit als Maß für die auf die Kraftmesszelle wirkende Kraft verwendet werden. Es ist aber auch möglich, das transmittierte (Teil-)Lichtsignal auf die Veränderung im Wellenlängenspektrum zu untersuchen. Zur Abfrage mittels des Lichtsignals kommt insbesondere eine breitbandige Lichtquelle, wie beispielsweise eine LED mit einer Bandbreite von etwa 45 nm, eine SLD mit einer Bandbreite von etwa 20 nm oder ein durchstimmbarer Laser mit einer Bandbreite von etwa 100 nm, zum Einsatz. Der Einsatz eines anderen optischen Sensors zur unmittelbaren Erfassung der Verformung des FBG-Sensors ist grundsätzlich ebenfalls möglich. So ist beispielsweise ein optischer Sensor auf Basis eines faseroptischen Fabry-Perot-Interferometers denkbar.

Es ist günstig, wenn der Kontaktkörper den Fahrdraht auf der dem Stromabnehmer zugewandten Seite um einen Abstand d überragt und der Verformungskörper um den Abstand Δs komprimierbar ist, wobei Δs < d gilt. Hiermit ist gewährleistet, dass die gesamte vom Stromabnehmer aus wirkende Kraft auf die Kraftmesszelle wirkt. Mittels einem elektrisch leitende Verbindungselement, das den Befestigungskörper mit dem Kontaktkörper elektrisch verbindet, können zudem den Stromabnehmer und auch den Fahrdraht schädigende Lichtbögen zwischen Stromabnehmer und Fahrdraht vermieden werden, wobei für das Schienentriebfahrzeug eine konstante Energiezufuhr garantiert ist.

Besonders vorteilhaft können die Verformungskörper elastisch sein. Nach einer Messung befindet sich die Kraftmesszelle infolgedessen wieder im Ausgangszustand, so dass im Prinzip mit einer Kraftmesszelle Messungen beliebig oft wiederholbar sind. Von den üblichen Verschleißerscheinungen, die auch am Fahrdraht vorkommen können, abgesehen, ist somit eine Kraftmesszelle beliebig oft einsetzbar ist.

Vorteilhafterweise ist der Verformungskörper im Wesentlichen aus Silikon ausgebildet. Dieses Material zeichnet sich durch besonders gute, gleich bleibende elastische Eigenschaft aus und ist dabei unempfindlich auf wechselnde Witterungsbedingungen.

Günstig ist, wenn Schrauben oder Klemmen als Befestigungsmittel vorgesehen sind. So gewährleisten insbesondere Schrauben einen festen und stabilen Halt der Kraftmesszelle am Fahrdraht. Besonders bei Klemmen als Befestigungsmittel ist die Montage denkbar einfach, da die Klemmen lediglich "aufgeklippt" werden müssen.

Bevorzugte, jedoch keinesfalls einschränkende Ausführungsbeispiele der Vorrichtung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: Kraftmesseinrichtung zur Bestimmung einer von einem Stromabnehmer eines Schienentriebfahrzeuges auf einen Fahrdraht einer Oberleitung wirkenden Kontaktkraft,
- Figur 2: einen Längsschnitt einer am Fahrdraht angebrachten Kraftmesszelle vor der Kraftbestimmung,
- Figur 3: einen Längsschnitt einer am Fahrdraht angebrachten Kraftmesszelle während der Kraftbestimmung und
- Figur 4: einen Querschnitt einer am Fahrdraht angebrachten Kraftmesszelle während der Kraftbestimmung.

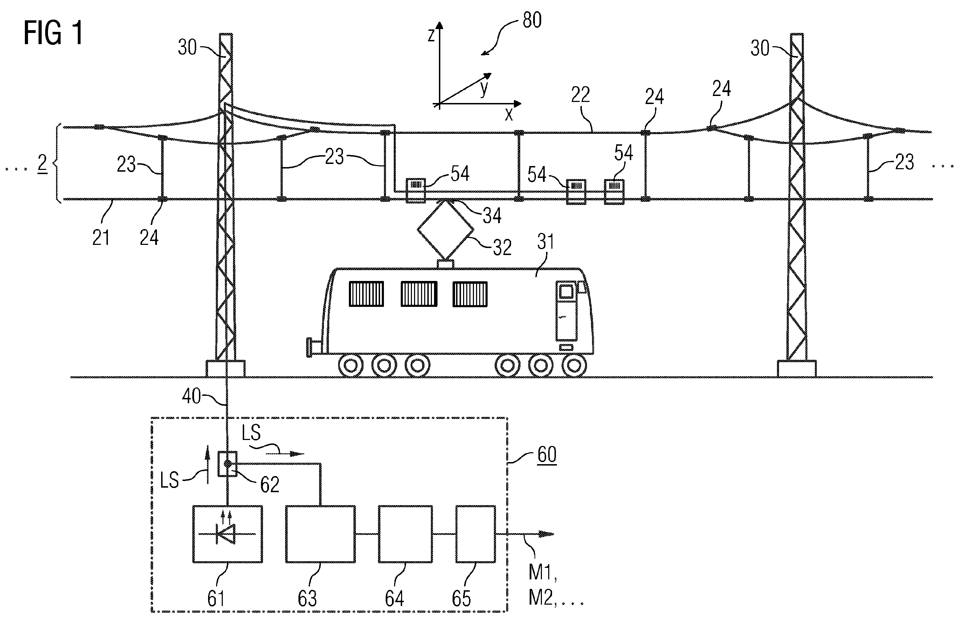

Einander entsprechende Teile sind in den Figuren 1 bis 4 mit denselben Bezugszeichen versehen.

In Figur 1 ist eine Kraftmesseinrichtung zur optischen Bestimmung einer von einem Stromabnehmer 32 eines Schienentriebfahrzeuges 31 auf einen Fahrdraht 21 eines Kettenwerks einer Bahn-Oberleitung 2 wirkenden Kontaktkraft dargestellt. Die Oberleitung 2 dient zur Energieversorgung des Schienentriebfahrzeugs 31 über den Stromabnehmer 32.

Die Oberleitung 2 besteht im Wesentlichen aus stromtragfähigen Komponenten wie Einspeiseleitung (nicht dargestellt in Figur 1), Tragseil 22, Fahrdraht 21, Hängern 23 und den zugehörigen Verbindungselementen 24. Zur Halterung der Oberleitung 2 sind mehrere Masten 30 vorgesehen. Über den Fahrdraht 21 wird die zum Betrieb des Schienentriebfahrzeugs 31 benötigte Leistung von beispielsweise 12 MW und mehr an den Ort des Stromabnehmers 32 (Pantograph) des Schienentriebfahrzeugs 31 transportiert. Der Fahrdraht 21 steht mit einer in Figur 1 schematisch angedeuteten quer zum Fahrdraht 21 angeordneten Schleifleiste 34 des Stromabnehmers 32 in Schleifkontakt. Die Schleifleiste 34 wird dabei mit einer gewissen Kraft, der so genannten Kontaktkraft, gegen den Fahrdraht 21 gedrückt. Dadurch wird ein für die elektrische Energieeinspeisung ausreichender elektrischer Kontakt zwischen Fahrdraht 21 und Stromabnehmer 32 gebildet. Das zumindest bei einer Oberleitung 2, die für eine Geschwindigkeit des Schienentriebfahrzeugs 31 von über 100 km/h ausgelegt ist, vorhandene Tragseil 22 hat eine Tragefunktion und dient aber auch zusätzlich zur Stromzuführung.

Zur Verdeutlichung der auf den Fahrdraht 21 wirkenden Kraftrichtungen ist in Figur 1 ein Koordinatensystem 80 mit einer x-, y- und z-Achse aufgetragen. Die Kraftkomponente in z-Richtung kann als die Kontaktkraft verstanden werden. Die Kräfte in y-Richtung treten als Quer- und Schnittkräfte auf und sind beispielsweise auf die abschnittsweise Mitführung des Fahrdrahtes 21 in Riefen einer defekten Schleifleiste zurückzuführen. Quer- und Schnittkräfte treten auch aufgrund der Zickzack-Anordnung des Fahrdrahtes 21 in Fahrtrichtung auf, die bei Fahrt des Schienentriebfahrzeugs 31 eine Querbewegung des Fahrdrahtes 21 relativ zum Stromabnehmer 32 und eine damit einhergehende Reibungskraft zur Folge hat. Die Kräfte in x-Richtung werden Längskräfte genannt und werden durch die Reibung zwischen Schleifleiste und Fahrdraht 21 bei Fahrt in Fahrtrichtung hervorgerufen.

Zur Bestimmung der Kontaktkraft sind Kraftmesszellen 54 vorgesehen. Die in Figur 1 dargestellte Verteilung dieser Kraftmesszellen 54 ist nur beispielhaft zu verstehen. Andere Sensor-Verteilungen sind ebenso möglich. Die einzelnen Kraftmesszellen 54 längs des Fahrdrahts 21 sind jeweils mit mindestens einem FBG-Sensor versehen, der in einem Lichtwellenleitersträngen eingeschrieben ist. Weisen die Kraftmesszellen 54 jeweils zwei FBG-Sensoren auf ist der in Figur 1 dargestellte Lichtwellenleiter 40 als Doppelstrang zu verstehen. Es sind in einer Kraftmesszelle 54 auch mehr als zwei Sensoren, die jeweils einem Lichtwellenleiterstrang zugeordnet sind, denkbar. Die Lichtwellenleiterstränge können dabei Teile eines einzigen Lichtwellenleiters 40 sein oder aber auch jeweils einem Lichtwellenleiter 40 entsprechen. Der bzw. die Lichtwellenleiter 40 können einstückig aufgebaut sein oder aber auch aus mehreren zumindest optisch miteinander verbundenen Teilen.

Das durch die Kraftmesszellen 54 gebildete Sensor-Netzwerk wird durch ein Lichtsignal LS, das von einer breitbandigen Lichtquelle 61 erzeugt wird, abgefragt. Über einen Koppler 62 und den oder die Lichtwellenleiter 40 wird das Lichtsignal LS in die FBG-Sensoren eingespeist.

Jeder der FBG-Sensoren hat eine spezifische Schwerpunktswellenlänge - die so genannte Bragg-Wellenlänge, die sich von derjenigen der anderen FBG-Sensoren unterscheidet. In jedem Sensor wird von dem eingespeisten Lichtsignal LS ein Anteil mit der jeweiligen Schwerpunktwellenlänge als Teil-Reflex-Lichtsignal zurückreflektiert. Der übrige Anteil des Lichtsignals LS passiert dagegen den betreffenden Sensor und trifft auf den nächsten Sensor. Am Koppler 62 steht dann ein von den FBG-Sensoren zurückreflektiertes Lichtsignal LS' an, das sich aus den Teil-Reflex-Lichtsignalen der einzelnen FBG-Sensoren zusammensetzt. Unter dem Einfluss der Kontaktkraft des Stromabnehmers 32 auf den Fahrdraht 21 am Ort der jeweiligen Kraftmesszelle 54 verändert sich die Schwerpunktwellenlänge des jeweiligen Sensors und damit auch der Wellenlängengehalt (= das Wellenlängenspektrum) des vom betreffenden Sensor reflektierten Teil-Reflex-Lichtsignals. Diese Veränderung im Lichtwellengehalt dient als Maß für die zu erfassende Größe. Es ist aber auch ein Transmissionsbetrieb denkbar (in Figur 1 nicht gezeigt). Hier muss im Gegensatz zum Reflexionsbetrieb das gesamte von der Lichtquelle LS ausgesandte Wellenlängenspektrum auf fehlende Wellenlängenbereiche untersucht werden. Denn diese fehlenden Wellenlängenbereiche entsprechen den jeweiligen Schwerpunktswellenlängen der einzelnen Sensoren.

Das am Koppler 62 anstehende reflektierte Lichtsignal LS' wird vom Koppler 62 zu einem optoelektrischen Wandler 63 geleitet. Letzterer beinhaltet insbesondere ein spektral selektives Element zur Selektion der einzelnen Teil-Reflex-Lichtsignale, beispielsweise in Gestalt eines Polychromators und einem gegebenenfalls auch mehrteiligen Lichtempfänger. Zur Analyse des Lichtspektrums sind Gitter- oder Beugungsspektrometer denkbar. Im Anschluss an die optoelektronische Wandlung findet in einem Analog/Digital-Wandler 64 eine Analog/Digital-Wandlung statt. Das digitalisierte Ausgangssignal des Analog/Digital-Wandlers 64 wird einer digitalen Auswerteeinheit 65 zugeführt, in der Messwerte M1, M2,... für die in den einzelnen Kraftmesszellen 54 erfasste Kontaktkraft ermittelt werden. Im Transmissionsbetrieb hingegen kann auf den Koppler 62 verzichtet werden. Hier wird an einem Ende des Lichtwellenleiter 40 bzw. der Lichtwellenleiter 40 das Lichtsignal LS mittels der Lichtquelle 61 angekoppelt und am anderen Ende des Lichtwellenleiters 40 bzw. der Lichtwellenleiter 40 von einem optoelektrischen Wandler 63 detektiert.

Die Lichtquelle 61, der Koppler 62, der optoelektrische Wandler 63, der Analog/Digital-Wandler 64 und die Auswerteeinheit 65 sind in einer Sende/Empfangseinheit 60 zusammengefasst, wobei die Lichtquelle 61 und der Koppler 62 als Einspeisemittel zur Einspeisung des Lichtsignals LS in die FBG-Sensoren sowie der optoelektrische Wandler 63, der Analog/Digital-Wandler 64 und die Auswerteeinheit 65 als Auswertemittel zur Bestimmung eines Messwertes M1, M2,... für die von den Kraftmesszellen 54 jeweils erfasste Kontaktkraft aufgefasst werden können. In einem anderen nicht gezeigten Ausführungsbeispiel können diese Untereinheiten oder Teile davon auch baulich voneinander getrennt, also nicht als gemeinsame Sende-/Empfangseinheit 60, ausgebildet sein. Außerdem ist auch eine rein analoge Auswertung, beispielsweise mittels einer fest verdrahteten elektronischen Schaltung möglich. Dann wäre kein Analog/Digital-Wandler 64 vorhanden und die Auswerteeinheit 65 analog realisiert.

Die Sende-/Empfangseinheit 60 des in Figur 1 gezeigten Beispiels befindet sich auf Erdpotential, wo hingegen die Oberleitung 2 auf einem in der Bahn-Energieversorgung üblichen Potential, insbesondere von 15 bis 25 kV, liegt. Die Überbrückung dieser Potentialdifferenz erfolgt mittels des Lichtwellenleiters 40 bzw. der Lichtwellenleiter 40, über den bzw. die auch das eingespeiste Lichtsignal LS und das reflektierte Lichtsignal LS' übertragen werden. Dadurch ergibt sich ein besonders kompakter Aufbau. Der bzw. die Lichtwellenleiter 40 besteht bzw. bestehen aus einem dielektrischen Material, wie beispielsweise Glas oder Kunststoff. Damit sind keine gesonderten Maßnahmen zur elektrischen Isolation erforderlich.

Die in der Sende-/Empfangseinheit 60 erzeugten Messwerte M1, M2,... werden beispielsweise mittels einer Funkübertragung zu einer in Figur 1 nicht dargestellten Datenerfassungseinheit übermittelt. Die Datenübertragung kann jedoch grundsätzlich auch leitungsgebunden elektrisch oder optisch erfolgen. Außerdem können die Sende-/Empfangseinheit 60 und die Datenerfassungseinheit auch als gemeinsame Einheit ausgebildet sein.

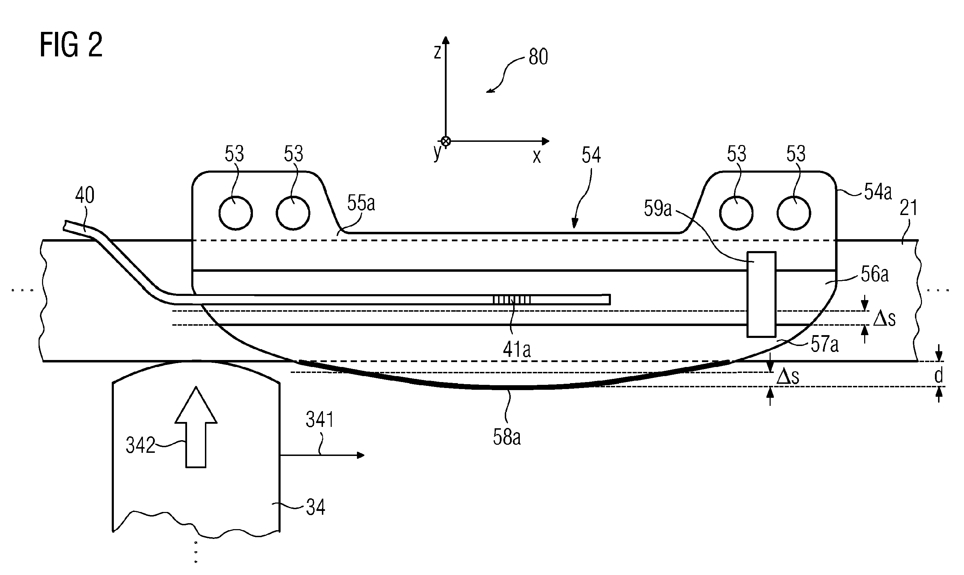

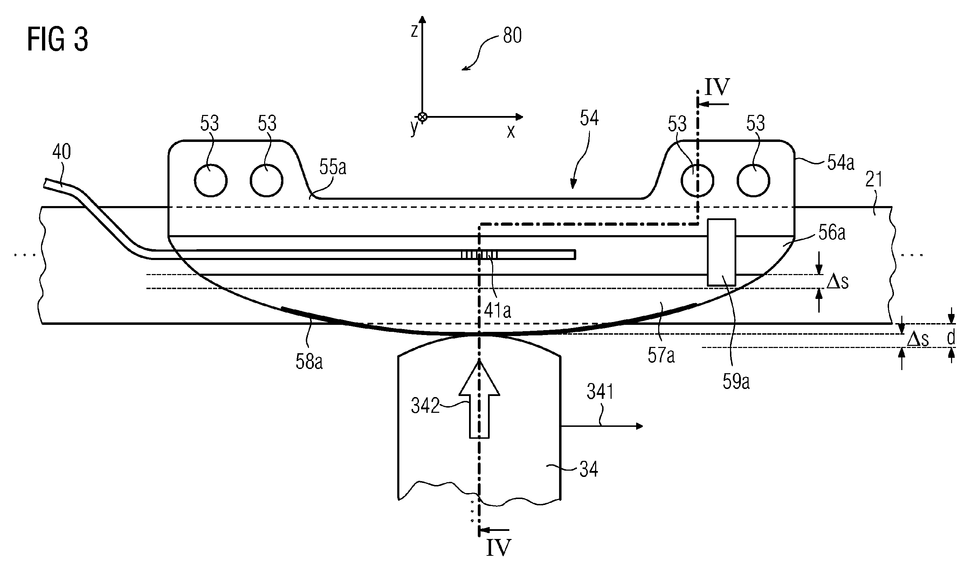

In Figur 2 ist in einem Längsschnitt eine an einem Fahrdraht 21 angeordnete Kraftmesszelle 54 vor der Kontaktkraftbestimmung dargestellt. Die Schleifleiste 34 eines Schienentriebfahrzeuges 31 bewegt sich, angedeutet durch einen Pfeil 341, in x-Richtung. Gemäß Figur 2 befindet sie sich noch vor der Kraftmesszelle 54. Von der Schleifleiste 34 aus wirkt eine Kontaktkraft auf den Fahrdraht 21 - hier durch einen weiteren Pfeil 342 in z-Richtung angedeutet. Die Kraftmesszelle 54 ist zweiteilig ausgeführt, wobei in Figur 1 nur eines von zwei Seitenteilen 54a und 54b sichtbar ist. Der hier dargestellte Seitenteil 54a der Kraftmesszelle 54 umfasst dabei im Wesentlichen einen Befestigungskörper 55a, einen Verformungskörper 56a und einen für den Stromabnehmerkontakt vorgesehenen Kontaktkörper 57a. Im Verformungskörper 56a ist formschlüssig ein Lichtwellenleiter 40 eingebettet, der mit einem eingeschriebenen FBG-Sensor 41 versehen ist. Der FBG-Sensor 41 ist damit ebenfalls formschlüssig im Verformungskörper 56a eingebettet. Weiter sind als Beispiel vier Befestigungsmittel 53 zur Fixierung der Kraftmesszelle 54 am Fahrdraht dargestellt. Der Befestigungskörper 55a und der Kontaktkörper 57a bestehen aus einem stabilen, harten Material, wie beispielsweise Aluminium, Bronze oder Edelstahl. Vorteilhafterweise ist das Kontaktkörpermaterial zudem noch abriebfest. Alternativ kann der Kontaktkörper 57a, der eine Kontaktfläche 58a aufweist, mit einer abriebfesten Beschichtung versehen sein. Der Verformungskörper 56a hingegen ist aus einem komprimierbaren, elastischen Puffermaterial ausgebildet. Hierzu bietet sich beispielsweise ein Material wie Silikon an. Denkbar ist aber auch für die Kraftübertragung auf den FBG-Sensor 41 ein im kraftschlüssigen Kontakt mit dem Sensor 41 stehendes Biegeelement oder eine im kraftschlüssigen Kontakt mit dem Sensor 41 stehende Feder im Verformungskörper 56a zu verwenden (in den Figuren nicht dargestellt). Die in Figur 2 schematisch dargestellte Momentaufnahme der Kraftmesszelle 54 vor einer Berührung mit der Schleifleiste 34 des Stromabnehmers 33 zeigt die Kraftmesszelle 54 in "entspanntem", kräftefreiem Ruhezustand. Dabei überragt der Kontaktkörper 57a mit seiner Kontaktfläche 58a den Fahrdraht 21 auf der der Schleifleiste 34 zugewandten Seite um den Abstand d. Der Verformungskörper 56a sollte dabei um den Abstand Δs komprimierbar sein, wobei Δs < d gilt. Dies ist in Figur 3 schematisch verdeutlicht. Hiermit ist gewährleistet, dass die gesamte vom Stromabnehmer 32 aus wirkende Kraft auf die Kraftmesszelle 54 wirkt. Mittels einem elektrisch leitende Verbindungselement 59a, das den Befestigungskörper 55a mit dem Kontaktkörper 57a elektrisch verbindet, können zudem den Stromabnehmer 32 und auch den Fahrdraht 21 schädigende Lichtbögen zwischen Stromabnehmer 32 und Fahrdraht 21 vermieden werden, wobei für das Schienentriebfahrzeug 31 eine konstante Energiezufuhr garantiert ist. Das Verbindungselement kann beispielsweise mittels Verschraubung oder Verlötung an den Befestigungskörper 55a und den Kontaktkörper 57a angebracht werden.

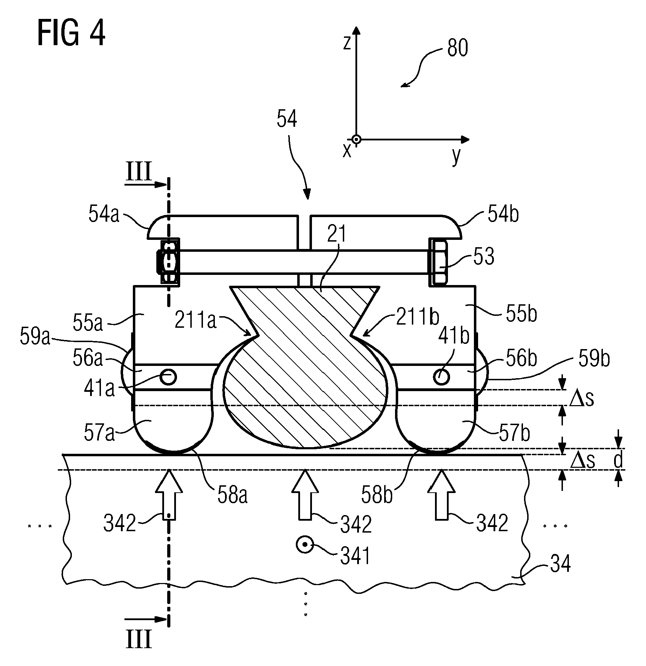

Figur 3 zeigt in einem Längsschnitt die in Figur 2 angegebene Kraftmesszelle 54 in einer Momentaufnahme bei der Kontaktkraftbestimmung. Die Schleifleiste 34 befindet sich hierbei direkt unter der Kraftmesszelle 54. Der Kontaktkörper 57a ist im Vergleich zu Figur 2 durch die Krafteinwirkung der Schleifleiste 34 um den Abstand Δs in z-Richtung verschoben, so dass gleichzeitig der Verformungskörper 56a um gerade den Abstand Δs komprimiert ist. Die somit im Verformungskörper 56a auftretenden Kräfte werden dabei auf den formschlüssig eingebetteten FBG-Sensor 41 übertragen und damit von diesem detektiert. Ist der Verformungskörper 56a zudem aus elastischem Material ausgeführt, so kann die Kraftmesszelle 54 bei Weiterlaufen der Schleifleiste 34 in x-Richtung wieder den in Figur 2 dargestellten Ausgangszustand annehmen und für eine erneute Kraftbestimmung zur Verfügung stehen. Da sich die Schleifleiste 34 in der Regel mit einer hohen Geschwindigkeit auf die Kraftmesszelle 54 zubewegt, sollte der Kontaktkörper 57a derart ausgestaltet sein, dass er die Schleifleiste 34 möglichst wenig in deren Bewegung beeinträchtigt. So ist es von Vorteil, wenn die Kraftmesszelle 54 derart kompakt ausgestaltet ist, dass deren Trägheitskräfte deutlich unter der zu bestimmenden Kontaktkraft von ca. 80 N liegt. Dies wird mit einem Gesamtgewicht der Kraftmesszelle 56 von maximal ca. 10 kg erreicht. Weiter sollte für einen "sanften" Übergang auf die Kraftmesszelle 54, der Kontaktkörper 57a länglich in Form einer so genannten Anlaufschiene vorteilhaft gekrümmt ausgestaltet sein. Der Abstand d sollte hierbei lediglich einige 100 µm betragen, während die Kraftmesszelle 54 insgesamt eine Länge von maximal 200 cm aufweist. In Figur 3 ist mit IV der in Figur 4 abgebildete Querschnitt angedeutet.

Die in Figur 4 abgebildete Momentaufnahme entspricht derjenigen aus Figur 3. Mit III ist der in Figur 3 dargestellte Längsschnitt der Kraftmesszelle 54 angegeben. Im in Figur 4 abgebildeten Querschnitt ist verdeutlicht, dass die Kraftmesszelle zwei Seitenteile 54a und 54b aufweist. Zur Befestigung des Fahrdrahtes 21 an den Hängern 23 des Kettenwerks ist der Fahrdraht 21 in der Regel an seiner der Schleifleiste 34 abgewandten Seite mit zwei Nuten 211a und 211b versehen. Diese ohnehin vorhandenen Nuten 211a und 211b werden für die Fixierung der Kraftmesszelle 54 genutzt. Die Befestigungskörper 55a und 55b sind am oberen Teil des Fahrdrahtes 21, insbesondere im Bereich der Nuten 211a und 211b, derart ausgebildet, dass sie in diesem Bereich formschlüssig an den Fahrdraht 21 angebracht werden können. Mit Befestigungsmitteln 53 - in Figur 4 ist als Beispiel eine Schraube mit Muttern angedeutet - werden beide am Fahrdraht 21 angebrachten Befestigungskörper 55a und 55b miteinander befestigt bzw. gemäß dem Ausführungsbeispiel in Figur 4 miteinander verschraubt. Anstelle von Verschraubungen ist auch eine Befestigungsmöglichkeit mittels Klemmen denkbar. Hierzu sind unter Vorspannung stehende Blattfedern geeignet, die für eine Fixierung der Kraftmesszelle 54 am Fahrdraht 51 beide Befestigungskörper aufeinander pressen. Es ist in Figur 4 weiter zu erkennen, dass die Schleifleiste 34 auch während der Kontaktkraftbestimmung den elektrischen Kontakt zum Fahrdraht 21 nicht verliert, da die elektrisch leitenden Verbindungselemente 59a und 59b den entsprechenden Befestigungskörper 55a bzw. 55b mit dem entsprechenden Kontaktkörper 57a bzw. 57b verbinden. Die Verbindungselemente 59a und 59b können dabei insbesondere jeweils aus einem Metallstreifen oder einer leitenden Litze ausgebildet sein.

Prinzipiell ist auch eine Ausgestaltung der Kraftmesszelle 54 mit nur einem FBG-Sensor 41a oder 41b in einem der beiden Verformungskörper 56a und 56b denkbar. Darüber hinaus kann die Kraftmesszelle 54 mit nur einem Kontaktkörper 57a oder 57b ausgestaltet sein, so dass ein Seitenteil 54b der Kraftmesszelle 54 nur den Befestigungskörper z.B. 55b umfasst, während der andere Seitenteil 54a , wie in den Figuren 2 bis 4 dargestellt, einen Befestigungskörper 55a, einen Verformungskörper 56a und einen Kontaktkörper 58a aufweist.

Die Kraftmesseinrichtung muss nicht auf eine Kraftmesszelle 54 mit optischem Dehnungssensor 41a, 41b, beschränkt sein. Denkbar ist auch eine Kraftmesszelle 54, mit welcher beispielsweise mittels Dehnungsmessstreifen die Stromabnehmerkraft auf die Kraftmesszelle bestimmbar ist. Das somit gewonnene Messsignal kann dann insbesondere mittels Funkübertragung an entsprechende Auswertemittel gesendet werden.

## Patentansprüche

1. Kraftmesseinrichtung zur Bestimmung einer von einem Stromabnehmer (32) eines Schienentriebfahrzeuges (31) auf einen Fahrdraht (21) einer Oberleitung (2) wirkenden Kontaktkraft, welche Einrichtung
- mindestens eine am Fahrdraht (21) zu befestigende mindestens einen Dehnungssensor (41a, 41b) aufweisende Kraftmesszelle (54) und
- Auswertemittel (63, 64, 65) zur Bestimmung eines Messwertes (M1, M2) für die auf den Fahrdraht (21) wirkende Kontaktkraft
umfasst.

2. Kraftmesseinrichtung nach Anspruch 1, **dadurch gekennzeichnet, dass** die Kraftmesszelle (54) zwei schenkelartige, mit dem Fahrdraht (21) kraftschlüssig zu verbindende Seitenteile (54a, 54b) aufweist, wobei
- wenigstens ein erster der beiden Seitenteile (54a, 54b) einen unter Einwirkung der Kontaktkraft des Stromabnehmers (32) komprimierbaren Verformungskörper (56a, 56b) enthält,
- der mindestens eine Dehnungssensor (41a, 41b) in dem Verformungskörper (56a, 56b) formschlüssig angeordnet ist, und
- der mindestens eine Dehnungssensor (41a, 41b) mit der Verformung des Verformungskörpers (56a, 56b) verformbar ist.

3. Kraftmesseinrichtung nach Anspruch 2, **dadurch gekennzeichnet, dass** ein zweiter der beiden Seitenteile (54a, 54b) einen Verformungskörper (56a, 56b) mit einem formschlüssig angeordneten Dehnungssensor (41a, 41b) enthält.

4. Kraftmesseinrichtung nach Anspruch 2 oder 3, **dadurch gekennzeichnet, dass** beide Seitenteile (54a, 54b) jeweils einen Befestigungskörper (55a, 55b) aufweisen, wobei
- die beiden Befestigungskörper (55a, 55b) teilweise formschlüssig am Fahrdraht (21) angeordnet sind, und
- mittels Befestigungsmittel (53) durch miteinander Befestigen beider Befestigungskörper (55a, 55b) die Kraftmesszelle (54) am Fahrdraht (21) fixierbar ist.

5. Kraftmesseinrichtung nach einem der Ansprüche 2 bis 4, **dadurch gekennzeichnet, dass** der jeweilige den Verformungskörper aufweisende Seitenteil (54a, 54b) einen für den Stromabnehmerkontakt vorgesehenen Kontaktkörper (57a, 57b) aufweist.

6. Kraftmesseinrichtung nach einem der vorhergehenden Ansprüche, **gekennzeichnet durch**
- mindestens einen Faser-Bragg-Gitter-Sensor als mindestens einen Dehnungssensor (41a, 41b)
und
- Einspeisemittel (61, 62) zur Einspeisung eines Lichtsignals (LS) in den mindestens einen Faser-Bragg-Gitter-Sensor (41a, 41b), wobei eine Verformung des mindestens einen Faser-Bragg-Gitter-Sensors (41a, 41b) mit einer Änderung des Lichtsignals (LS) verbunden ist,
wobei
- der Messwert (M1, M2) für die auf den Fahrdraht (21) wirkende Kontaktkraft aus der verformungsbedingten Änderung des Lichtsignals (LS) bestimmbar ist.

7. Kraftmesseinrichtung nach Anspruch 5 oder 6, **dadurch gekennzeichnet, dass**
- der Kontaktkörper (57a, 57b) den Fahrdraht (21) auf der dem Stromabnehmer (32) zugewandten Seite um einen Abstand d überragt
und
- der Verformungskörper (56a, 56b) um den Abstand Δs komprimierbar ist, wobei Δs < d gilt.

8. Kraftmesseinrichtung nach einem der Ansprüche 2 bis 7, **dadurch gekennzeichnet, dass** der Verformungskörper (56a, 56b) elastisch ist.

9. Kraftmesseinrichtung nach einem der Ansprüche 2 bis 8, **dadurch gekennzeichnet, dass** der Verformungskörper (56a, 56b) im Wesentlichen aus Silikon ausgebildet ist.

10. Kraftmesseinrichtung nach einem der Ansprüche 4 bis 9, **gekennzeichnet durch** Schrauben als Befestigungsmittel (53).
